# FASCICULE DE BREVET EUROPEEN

(11) **EP 2 179 194 B1**
(45) Date de publication et mention de la délivrance du brevet: **20.11.2013**
(21) Numéro de dépôt: 08827616.7
(22) Date de dépôt: 18.06.2008
(51) Int. Cl.: F16F 1/18, F02K 1/72

(54) **RESSORT POUR VOLET D'INVERSEUR DE POUSSEE A GRILLES POUR TURBOREACTEUR D'AERONEF**
...
SPRING FOR A CASCADE-TYPE THRUST REVERSER SHUTTER FOR AN AIRCRAFT JET ENGINE

(30) Priorité: 20.08.2007 FR 0705893
(43) Date de publication de la demande: 28.04.2010
(73) Titulaire: Aircelle, 76700 Gonfreville l'Orcher (FR)
(72) Inventeur: HOGIE, Jean-Paul, F-76600 le Havre (FR)
(74) Mandataire: Gaillarde, Frédéric F. Ch.
(86) Numéro de dépôt international: PCT/FR2008/000844
(87) Numéro de publication internationale: WO 2009/024658

(56) Documents cités:
- EP-A- 0 321 993
- EP-A- 1 098 106
- GB-A- 2 320 547
- US-A- 1 912 451
- US-B1- 6 254 070

## Description

La présente invention se rapporte à un ressort pour volet d'inverseur de poussée à grilles pour turboréacteur d'aéronef.

Comme cela est connu en soi, un inverseur de poussée à grilles pour turboréacteur d'aéronef comprend typiquement une pluralité de volets solidaires du capot coulissant de cet inverseur, coopérant avec des bielles reliées à la structure interne fixe de l'inverseur de poussée.

Lorsque l'inverseur de poussée fonctionne en jet direct, les volets sont maintenus par les bielles dans le prolongement de la paroi interne du capot coulissant.

Lorsque l'inverseur de poussée fonctionne en jet inversé, les volets sont actionnés par les bielles de manière à obstruer la cavité de circulation de l'air secondaire du turboréacteur, et à dévier ainsi la veine d'air secondaire vers l'avant, permettant de réaliser une inversion de poussée et donc un freinage de l'aéronef équipé d'un tel inverseur.

Il est connu de placer des ressorts entre les bielles et les volets, de manière à compenser les écarts de tolérances et les déformations de structure lorsque les volets sont en position « jet direct », tout en permettant aux bielles d'assurer une pression suffisante sur ces volets dans cette position.

Différents types de ressorts ont été utilisés à ce jour, hélicoïdaux ou à lames.

Un objet de la présente invention est de fournir un ressort plus léger que ceux de la technique antérieure.

Document WO 84/01344 divulgue un inverseur de poussée comprenant un ressort torsionnel.

On atteint ce but de l'invention avec un ressort à lame pour volet d'inverseur de poussée, caractérisé en ce qu'il présente deux branches définissant une forme de U, les extrémités de ces branches étant aptes à coopérer respectivement avec un volet dudit inverseur et avec une bielle d'actionnement de ce volet.

Grâce à cette forme particulière, les extrémités de ce ressort sont soumises à des moments fléchissants faibles ou nuls, ce qui permet d'avoir un ressort qui, pour une masse donnée, présente un meilleur comportement élastique.

Suivant d'autres caractéristiques optionnelles de ce ressort :
- lesdites extrémités sont disposées sensiblement en vis-à-vis l'une de l'autre : cette disposition particulière permet de faire travailler sur toute leur longueur les deux branches du U, et donc là encore d'améliorer le comportement élastique du ressort pour une masse donnée ;
- au moins l'une desdites branches comprend deux parties en forme de fourche ;
- la branche dudit ressort qui est destinée à coopérer avec ladite bielle présente une section allant en décroissant du fond dudit U vers l'extrémité de cette branche : le moment fléchissant auquel est soumis cette branche allant en décroissant de son extrémité vers le fond du U, on comprend qu'il n'est effectivement pas nécessaire de prévoir que cette branche présente la même section sur toute sa longueur : on peut de la sorte réduire la masse du ressort ;
- la branche dudit ressort qui est destinée à coopérer avec ladite bielle présente à son extrémité des retours aptes à former palier pour ladite bielle : ces retours formés dans la masse du ressort permettent de s'affranchir de pièces supplémentaires formant paliers, et donc de gagner du poids ;
- la branche dudit ressort qui est destinée à coopérer avec ledit volet présente des plats de fixation au voisinage de son extrémité ;
- ce ressort est formé au moins en partie dans un alliage à base de titane : un tel alliage permet de gagner du poids ;
- ce ressort est formé au moins en partie en composite : cette solution permet également de gagner du poids.

La présente invention se rapporte également à un inverseur de poussée à grilles, remarquable en ce qu'il comprend au moins un ressort conforme à ce qui précède.

La présente invention se rapporte également à une nacelle pour turboréacteur, remarquable en ce qu'elle comprend un inverseur de poussée conforme à ce qui précède.

D'autres caractéristiques et avantages de la présente invention apparaîtront à la lecture de la description qui va suivre et à l'examen des figures ci-annexées, dans lesquelles :
- la figure 1 représente une vue en coupe axiale d'un inverseur de poussée à grille, équipé d'au moins un ressort selon l'invention, cet inverseur étant représenté en position de jet direct,
- la figure 2 est une vue analogue à la figure 1, l'inverseur étant représenté en position de jet inversé,
- la figure 3 représente en perspective la zone III indiquée sur la figure 2, et
- la figure 4 représente cette zone III selon une vue analogue à celle des figures 1 et 2.

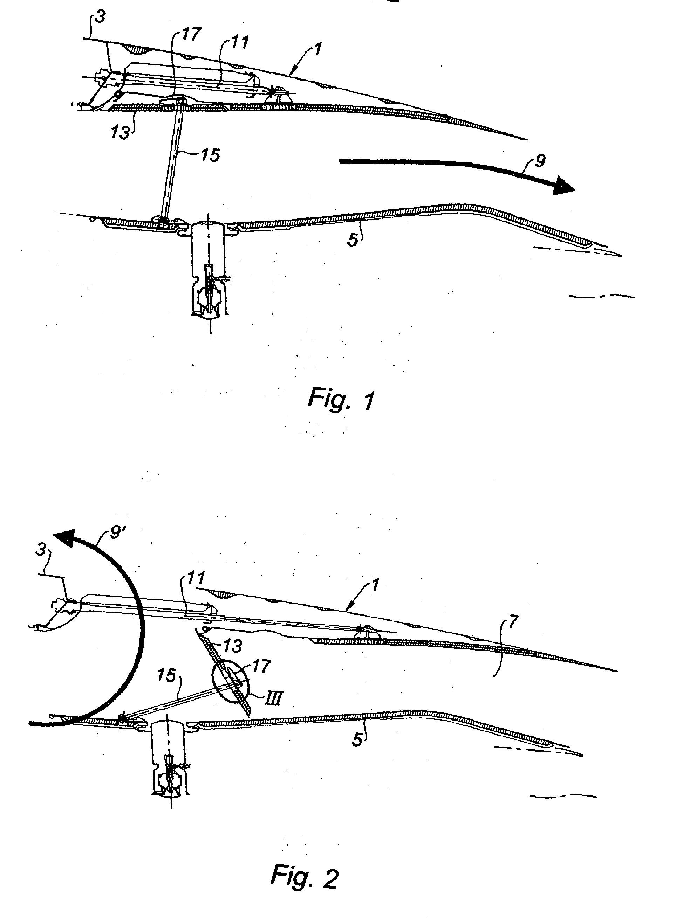

En se reportant à la figure 1, on a représenté un inverseur de poussée à grilles, comprenant typiquement un capot 1 monté coulissant par rapport à une structure fixe, laquelle comprend un cadre avant fixe 3 et une structure interne fixe 5.

Comme cela est connu en soi, le capot coulissant et la structure interne fixe 5 définissent entre eux une veine d'air froid annulaire 7.

En mode de fonctionnement normal, c'est-à-dire en croisière, l'air froid circule à l'intérieur de cette veine 7 comme indiqué par la flèche 9 de la figure 1, c'est-à-dire le long de la paroi intérieure du capot 1 et de la structure fixe interne 5.

Dans ce mode de fonctionnement, cet air froid 9 vient s'ajouter à l'air chaud sortant du turboréacteur (non représenté), contribuant ainsi à la poussée d'un aéronef (non représenté).

En mode d'inversion de poussée (voir figure 2), le capot coulissant 1 circule vers l'arrière du turboréacteur, c'est-à-dire vers la droite de la figure 2 sous l'effet d'un actionneur tel qu'un vérin hydraulique 11.

Ce coulissement a pour effet d'entraîner l'obturation de la veine annulaire 7 par une pluralité de volets 13 distribués tout autour de cette veine, un seul d'entre eux étant visible sur les figures 1 et 2, et la redirection du flux d'air frais vers l'avant de la nacelle (voir flèche 9' de la figure 2).

Chaque volet 13 est monté articulé sur le capot coulissant 1, et son mouvement de la position visible à la figure 1, dans laquelle il se situe dans le prolongement de la paroi interne du capot coulissant 1, vers sa position d'obturation visible à la figure 2, dans laquelle il se trouve en travers de la veine d'air froid 7, est obtenu sous l'action d'une bielle 15 dont les extrémités sont montées pivotantes respectivement sur la structure interne fixe 5 et sur le volet 13.

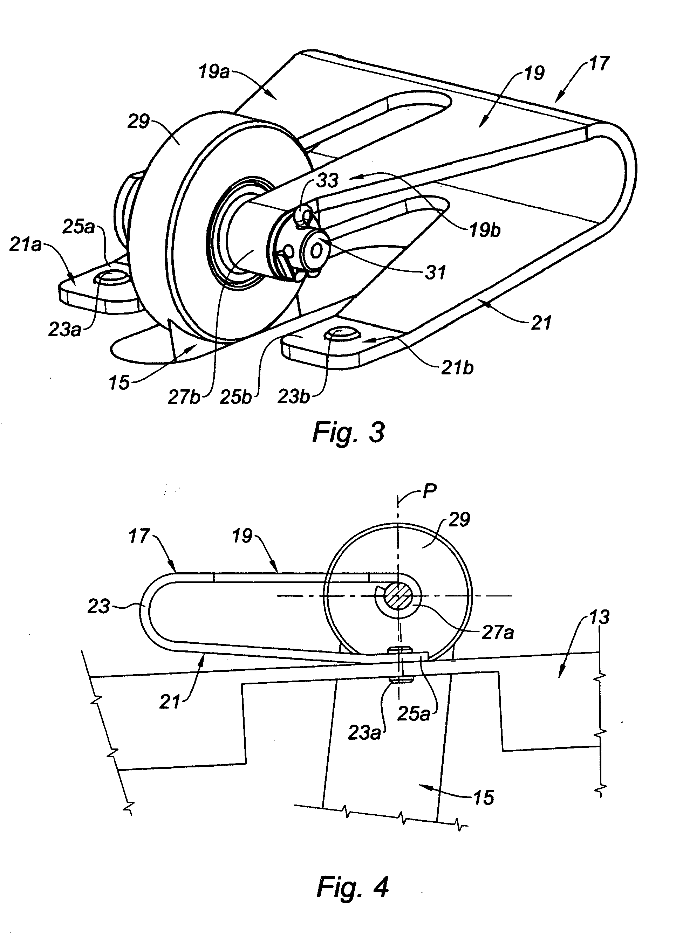

Plus spécifiquement, et comme cela est visible sur les figures 3 et 4, la bielle 15 coopère avec le volet 13 par l'intermédiaire d'un ressort 17.

Ce ressort présente une forme générale en U, c'est-à-dire qu'il comporte deux branches 19, 21 reliées entre elles par une partie courbée 23.

Chacune de ces deux branches présente en fait une extrémité en fourche, c'est-à-dire comportant deux parties, respectivement 19a, 19b, et 21a, 21b.

Les parties 21 a, 21 b de la branche 21 sont fixées à leurs extrémités respectives sur le volet 13, par des moyens appropriés tels que des rivets 23a, 23b.

De préférence, comme cela est visible sur les figures 3 et 4, chaque partie 21 a, 21 b, de la branche 21 comporte à son extrémité un plat de fixation respectif 25a, 25b, c'est-à-dire une partie formant un léger angle avec le reste de la branche 21.

Les deux parties 19a, 19b de la branche 19 présentent de préférence une forme effilée en allant de la partie courbée 23 du ressort vers l'extrémité de la branche 19.

Chacune de ces parties 19a, 19b, comporte à son extrémité un retour 27b formé de matière avec le reste du ressort 17, et définissant un palier pour une extrémité 29 de la bielle 15.

A cet effet, un axe 31 s'étend entre les deux retours 27a, 27b, et à travers l'extrémité 29 de la bielle 15, cet axe pouvant être maintenu par des goupilles 33.

Comme cela est particulièrement visible sur la figure 4, on notera que les extrémités de la branche 19 et de la branche 21, coopérant avec la bielle 15 et avec le volet 13, sont de préférence situées en vis-à-vis, c'est-à-dire sensiblement dans un plan P contenant ces extrémités et perpendiculaires au volet 13.

De manière avantageuse, le ressort 17 pourra être formé au moins en partie dans un alliage de titane et/ou en matériau composite.

Le tableau ci-dessous indique que de très bonnes performances du ressort peuvent être obtenues, notamment avec un alliage du type titane TV866, ou avec des matériaux composite du type tissu UD verre/epox ou tissu UD carbone/epox.

Dans ce tableau, δ indique la contrainte admissible en fatigue du matériau, E indique le module d'élasticité du matériau, l'Energie est égale à δ²/E, la Densité indique la densité du matériau, et la Performance est définie comme étant le rapport entre l'Energie et la Densité.

| | Acier ressort | Alliage de titane TAD4E | Alliage de Titane TV866 | Alliage Alu A28GV | Tissus UD Verre/epox | Tissus UD Kevlar/epox | Tissus UD Carbone/epox |
|---|---|---|---|---|---|---|---|
| Δ (Mpa) | 1200 | 1200 | 1400 | 500 | 800 | 500 | 1100 |
| E (Mpa) | 205000 | 116000 | 106000 | 70000 | 45000 | 85000 | 13000 |
| Energie | 7,02 | 12,4 | 18,5 | 3,57 | 14,22 | 2,94 | 9,30 |
| Densité | 8 | 4,5 | 4,5 | 2,72 | 2,5 | 1,6 | 1,8 |
| **Performance** | **0,9** | **2,8** | **4,1** | **1,3** | **5,7** | **1,8** | **5,2** |

Le ressort qui a été décrit ci-dessus permet de compenser les écarts de tolérance et les déformations de structure lorsque le volet 13 se trouve en position de « jet direct », c'est-à-dire dans la position représentée à la figure 1, dans laquelle ce volet doit trouver sa place dans un logement de dimension prédéterminée, défini d'une part par le capot coulissant 1, et d'autre part par le cadre avant 3.

Tout en permettant cette compensation de tolérance, le ressort 17 permet à la bielle 15 d'exercer une pression suffisante sur le volet 13 pour le maintenir dans sa position représentée à la figure 1.

Comme cela a été indiqué précédemment, la forme en U du ressort, le positionnement en vis-à-vis de ses deux branches, les sections effilées de ces deux branches ainsi que le choix du matériau le formant, permettent d'atteindre un excellent compromis entre la performance de ce ressort et le gain de poids qu'il permet de réaliser.

A titre indicatif, un tel ressort permet de gagner 150 g par rapport à un ressort de la technique antérieure.

Sachant qu'une douzaine de tels ressorts équipent un inverseur de poussée à grille, on peut donc gagner 1800 g par inverseur de poussée.

Or, comme cela est bien connu dans l'aéronautique, la pénalité induite par 1 g est évaluée à 1 $.

Dans le cas d'espèce, le gain permis par le ressort et son invention est donc évalué à 1800 $ par inverseur de poussée.

Dans l'hypothèse où le ressort est réalisé en titane, matériau légèrement plus coûteux que les matériaux traditionnels, le gain serait ramené approximativement à 1500 $ par inverseur.

Bien entendu, la présente invention n'est nullement limitée au mode de réalisation décrit et représenté, fourni à titre de simple exemple.

## Revendications

1. Nacelle pour turboréacteur comprenant un inverseur de poussée à grilles **caractérisée en ce que** l'inverseur comprend un ressort à lame (17), présentant deux branches (19, 21) définissant une forme de U, les extrémités (19a, 19b, 21a, 21b) de ces branches coopérant respectivement avec un volet (13) dudit inverseur et avec une bielle (15) d'actionnement de ce volet.

2. Nacelle selon la revendication 1, **caractérisé en ce que** lesdites extrémités (19a, 19b, 21 a, 21 b) sont disposées sensiblement en vis-à-vis l'une de l'autre.

3. Nacelle selon l'une des revendications 1 ou 2, **caractérisé en ce qu'**au moins l'une desdites branches (19, 21) comprend deux parties en forme de fourche (19a, 19b, 21 a, 21 b).

4. Nacelle selon l'une quelconque des revendications précédentes, **caractérisé en ce que** la branche (19) dudit ressort qui est destinée à coopérer avec ladite bielle (15) présente une section allant en décroissant du fond dudit U vers l'extrémité de cette branche.

5. Nacelle selon l'une quelconque des revendications précédentes, **caractérisé en ce que** la branche (19) dudit ressort qui est destinée à coopérer avec ladite bielle (15) présente à son extrémité des retours (27a, 27b) aptes à former palier pour ladite bielle (15).

6. Nacelle selon l'une quelconque des revendications précédentes, **caractérisé en ce que** la branche (21) dudit ressort qui est destinée à coopérer avec ledit volet (13) présente des plats de fixation (25a, 25b) au voisinage de son extrémité.

7. Nacelle selon l'une quelconque des revendications précédentes, **caractérisé en ce que** le ressort est formé au moins en partie dans un alliage à base de titane.

8. Nacelle selon l'une quelconque des revendications précédentes, **caractérisé en ce que** le ressort est formé au moins en partie en matériau composite.

## Patentansprüche

1. Gondel für Turbotriebwerk mit einer Schubumkehr mit Gittern, **dadurch gekennzeichnet, dass** die Umkehr eine Blattfeder (17) umfasst, die zwei Schenkel (19, 21) aufweist, die eine U-Form definieren, wobei die Enden (19a, 19b, 21 a, 21 b) dieser Schenkel jeweils mit einer Klappe (13) der Umkehr und mit einem Betätigungs-Pleuel (15) dieser Klappe zusammenarbeiten.

2. Gondel nach Anspruch 1, **dadurch gekennzeichnet, dass** die Enden (19a, 19b, 21 a, 21 b) einander etwa gegenüber angeordnet sind.

3. Gondel nach einem der Ansprüche 1 oder 2, **dadurch gekennzeichnet, dass** mindestens einer der Schenkel (19, 21) zwei Teile in Gabelform (19a, 19b, 21 a, 21 b) umfasst.

4. Gondel nach einem der vorangehenden Ansprüche, **dadurch gekennzeichnet, dass** der Schenkel (19) der Feder, der zur Zusammenarbeit mit dem Pleuel (15) bestimmt ist, einen Querschnitt aufweist, der vom Boden des U in Richtung des Endes dieses Schenkels abnimmt.

5. Gondel nach einem der vorangehenden Ansprüche, **dadurch gekennzeichnet, dass** der Schenkel (19) der Feder, der zur Zusammenarbeit mit dem Pleuel (15) bestimmt ist, an seinem Ende Rücksprünge (27a, 27b) aufweist, die imstande sind, für den Pleuel (15) ein Lager zu bilden.

6. Gondel nach einem der vorangehenden Ansprüche, **dadurch gekennzeichnet, dass** der Schenkel (21) der Feder, der zur Zusammenarbeit mit der Klappe (13) bestimmt ist, in der Nähe seines Endes Befestigungsteller (25a, 25b) aufweist.

7. Gondel nach einem der vorangehenden Ansprüche, **dadurch gekennzeichnet, dass** die Feder mindestens teilweise aus einer Legierung auf Titanbasis gebildet ist.

8. Gondel nach einem der vorangehenden Ansprüche, **dadurch gekennzeichnet, dass** die Feder mindestens teilweise aus Verbundmaterial gebildet ist.

## Claims

1. A turbojet engine nacelle comprising a cascade thrust reverser **characterized in that** the reverser comprises a leaf spring (17) having two branches (19, 21) defining a U shape, the ends (19a, 19b, 21 a, 21 b) of said branches respectively cooperating with a flap (13) of said reverser and with a link rod (15) actuating said flap.

2. The nacelle according to claim 1, **characterized in that** said ends (19a, 19b, 21 a, 21 b) are positioned substantially across from one another.

3. The nacelle according to one of claims 1 or 2, **characterized in that** at least one of said branches (19, 21) comprises two fork-shaped portions (19a, 19b, 21a, 21b).

4. The nacelle according to any one of the preceding claims, **characterized in that** the branch (19) of said spring that is intended to cooperate with the link rod (15) has a section that decreases from the bottom of said U toward the end of that branch.

5. The nacelle according to any one of the preceding claims, **characterized in that** the branch (19) of said spring that is intended to cooperate with the link rod (15) has, at its end, returns (27a, 27b) capable of forming a bearing for said link rod (15).

6. The nacelle according to any one of the preceding claims, **characterized in that** the branch (21) of said spring that is intended to cooperate with said flap (13) has fastening flats (25a, 25b) near its end.

7. The nacelle according to any one of the preceding claims, **characterized in that** the spring is at least partially made from a titanium-based alloy.

8. The nacelle according to any one of the preceding claims, **characterized in that** the spring is at least partially made from a composite material.
